# EUROPÄISCHE PATENTANMELDUNG

(11) **EP 2 424 329 A2**
(43) Veröffentlichungstag der Anmeldung: **29.02.2012**
(21) Anmeldenummer: 11182529.5
(22) Anmeldetag: 23.09.2011
(51) Int. Cl.: H05B 6/12

(54) **Induktionskochherd mit interaktiv einstellbarer Heizleistung**

(30) Priorität: 26.08.2010 CH 15462010
(71) Anmelder: W. Hermann GesmbH, 6974 Gaissau (AT)
(72) Erfinder: Hermann, Wolfgang, 6974 Gaissau (AT)
(74) Vertreter: Felber, Josef

(57) **Zusammenfassung**

Der Induktionskochherd ermöglicht eine interaktiv einstellbare Heizleistung. Als Besonderheit weist er mindestens eine Induktionsspule (1) auf, deren Spulenebene mit der Oberfläche der Induktionsherdplatte (2) einen spitzen Winkel einschliesst, oder aber er weist mindestens zwei in Serie geschaltete Induktionsspulen (1) mit unterschiedlicher Windungszahl auf. Durch horizontales Verschieben des Kochgerätes (5) auf der Induktionsherdplatte (2) kann die wirksame Heizleistung im Boden des Kochgerätes (5) höchst einfach und praktisch variiert werden.

## Beschreibung

Diese Erfindung betrifft einen Induktionskochherd, bei welchem die Heizleistung interaktiv, das heisst durch Zusammenwirken mit dem Kochgefäss einstellbar ist.

Herkömmliche Induktionskochherde weisen eine Herdabdeckung auf, unter derselben Induktionsspulen angeordnet sind. In den meisten Fällen handelt es sich bei den Herdabdeckungen um Glasplatten, und bei den Induktionsspulen um spiralförmig in einer Ebene angeordnete Spulen aus Kupferdraht. Die Wicklungsebene der Induktionsspulen verläuft dabei parallel zur Ebene der Herdabdeckung, bzw. die Wicklungsachse verläuft senkrecht zu derselben. Es kommen dabei Induktionsspulen unterschiedlichen Durchmessers zum Einsatz, die dann in derselben Ebene nebeneinander angeordnet werden. Es sind auch Kochherde bekannt, die quadratische oder rechteckige Spulen aufweisen, sodass die gesamte Herdabdeckung zum Kochen verwendet werden kann, also nicht darauf geachtet werden muss, dass eine Pfanne oder ein Kochgerät über das Zentrum einer Spule ausgerichtet ist. Zwischen den Induktionsspulen und der Herdabdeckung kommt eine Abschirmung in Form einer offenen, also entschieden nicht geschlossenen Leiterschlaufe zum Einsatz. Geeignet ist eine durchgehende leitfähige Folie, die geerdet wird, oder ein mäandrierender Leiter, der sich unter der ganzen Fläche des Kochfeldes hin und her schlängelt und an eine Erdung führt. Eine solche Abschirmung vermag das Kribbeln in den Fingern des Koches, welcher beim Kochen den Pfannenstiel ergreift, und welches Kribbeln bei grosser Induktionsleistung auftritt, etwas zu reduzieren.

Beim Kochen muss oftmals die Induktionsleistung verändert werden. Die Induktionsherde sind mit Spannungsreglern ausgerüstet, sodass also die Heizleistung jeder Induktionsspule stufenlos variierbar ist. Bedingung zum Regulieren ist aber, dass der Koch mit der Hand an diese Regler ergreifen muss und sie betätigen muss. Es kann sich dabei um Drehknöpfe, um Schieber oder um Touchscreen-Tasten handeln. Aber in jedem Fall muss der Koch eine Hand freimachen und an die Bedienelemente des Induktionsherdes greifen. Weil das für die Köche umständlich ist, behelfen sich viele damit, die Pfanne einfach etwas von der Induktionsspule wegzuziehen, sodass also das Kochgerät oder die Pfanne nicht mehr konzentrisch auf der Induktionsspule steht, sondern seitlich zu derselben verschoben. Bei durchgehend von eckigen Induktionsspulen ausgefüllten Kochfeldern können die Pfannen entsprechend etwas über den Rand des Kochfeldes hinausgezogen werden. Mit diesem Behelf wirken dann die Induktionsspulen aber bloss noch auf den von der Pfanne überdeckten Bereich, jedoch dort immer noch mit unverminderter Leistung. Wird also eine Pfanne zur Hälfte von einer darunterliegenden Induktionsspule weggezogen, so erhitzt die Induktionsspule nur noch das Pfannenboden-Material, welches direkt über ihr liegt. Das restliche Pfannenboden-Material wird nur durch den Wärmefluss innerhalb des Pfannenbodens erhitzt, was mit zeitlicher Verzögerung erfolgt. Jedenfalls ist bei einer solchen Pfanne dann der Pfannenboden über der Induktionsspule wesentlich heisser als jener, der von der Induktionsspule weggezogen wurde.

Die Aufgabe dieser Erfindung ist es deshalb, einen Induktionskochherd mit interaktiv einstellbarer Heizleistung zu schaffen, welcher das Regulieren der Heizleistung erlaubt, ohne dass spezifische Bedienelemente ergriffen werden müssen, und trotzdem der Boden der Kochgeräte annähernd homogen erhitzt wird. Ausserdem ist es eine Aufgabe der Erfindung, einen Induktionskochherd zu schaffen, der es ermöglicht, dass mehrere Pfannen bei Einstellung einer einzigen Induktionsleistung des Herdes gleichzeitig an verschiedenen Orten auf dem Herd abgestellt und mit unterschiedlicher Heizleistung beheizt werden können.

Diese Aufgabe wird gelöst von einem Induktionskochherd mit interaktiv einstellbarer Heizleistung, der sich dadurch auszeichnet, dass er mindestens eine Induktionsspule aufweist, deren Spulenebene mit der Oberfläche der Induktionsherdplatte einen spitzen Winkel einschliesst, oder mindestens zwei in Serie geschaltete Induktionsspulen mit unterschiedlicher Windungszahl, sodass durch horizontales Verschieben des Kochgerätes auf der Induktionsherdplatte die wirksame Heizleistung im Boden des Kochgerätes variierbar ist.

In den Zeichnungen werden Beispiele eines solchen Induktionskochherdes dargestellt und anhand derselben werden sie nachfolgend im Einzelnen beschrieben und ihre Funktion wird erklärt.
Es zeigt:
- Figur 1:: Die schiefwinklig zur Induktionskochherdplatte angeordnete Induktionsspule in einer schematischen, perspektivischen Ansicht;
- Figur 2:: Die schiefwinklig zur Induktionskochherdplatte angeordnete Induktionsspule in einer schematischen Ansicht von der Seite her gesehen;
- Figur 3:: Eine Nullen-förmige Induktionsspule mit Ferriten zur Erhöhung der Induktivität;
- Figur 4:: Diese Induktionsspule in einer Ansicht von oben gesehen, mit darauf passender Fischpfanne;

- Figur 5:: Diese Induktionsspule unter einer Induktionskochherdplatte mit einer Pfanne ganz links angeordnet, für maximale Heizleistung;
- Figur 6:: Diese Induktionsspule unter einer Induktionskochherdplatte mit einer Pfanne in der Mitte angeordnet, für eine mittlere Heizleistung;
- Figur 7:: Diese Induktionsspule unter einer Induktionskochherdplatte mit einer Pfanne ganz rechts angeordnet, für eine auf 25% reduzierte Heizleistung;
- Figur 8:: Diese Induktionsspule unter einer Induktionskochherdplatte mit gleichzeitig zwei Pfannen darauf angeordnet;
- Figur 9a-d:: Vier Anordnungen von Induktionsspulen je in einer Reihe mit degressiver Heizleistung bei gleicher Spannung;
- Figur 10a-d:: Vier Anordnungen von Induktionsspulen mit je gleich vielen Windungen, jedoch für geneigten Einbau unter der Induktionsherdplatte.

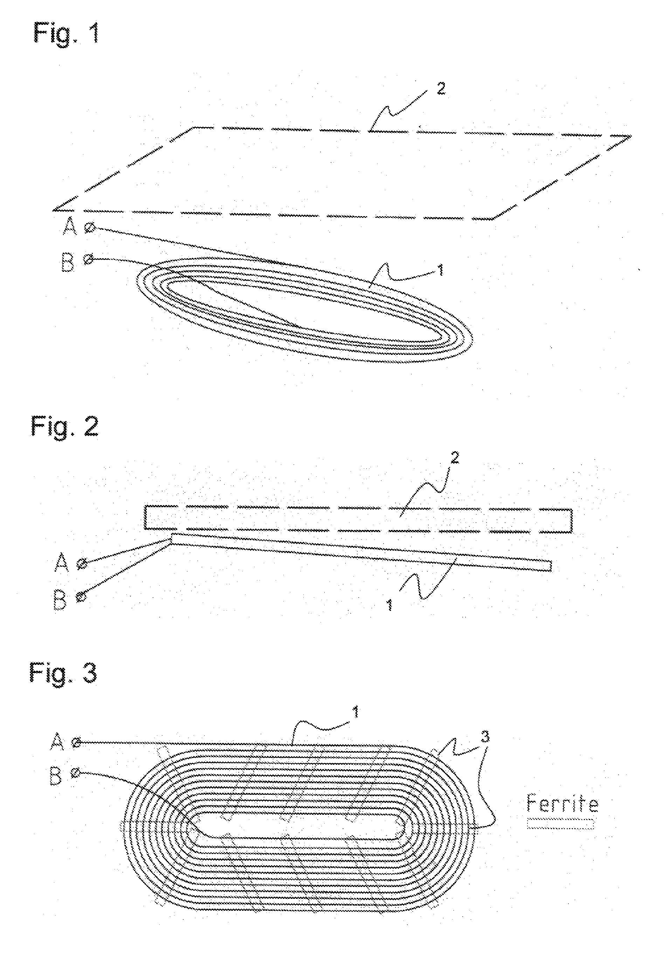

Die Figur 1 zeigt eine elegante Ausführung der Erfindung, indem die Wicklungsebene der Induktionsspule 1 hier schiefwinklig zur Induktionskochherdplatte 2 angeordnet ist. Das ist in Figur 1 schematisch in einer perspektivischen Ansicht gezeigt. Die Induktionsherdplatte 2 ist eben und horizontal eingebaut. Die unterhalb dieser Induktionsherdplatte 2 eingebaute Induktionsspule 1 ist mit ihrer Wicklungsebene so eingebaut, dass diese mit der Oberfläche der Induktionsherdplatte 2 einen spitzen Winkel einschliesst. Mit A und B sind die Enden der spiralförmig gewickelten Spule 1 bezeichnet. An diesen Stellen wird die Induktionsspule 1 an ein hochfrequentes Wechselfeld angeschlossen. Befindet sich nun eine Pfanne auf dem Induktionsherd, so werden im Pfannenboden laufend in ihrer Ausrichtung hin und her wechselnde Magnetfelder wirksam, was zu einer Erhitzung des Pfannenbodens führt. Je näher die Pfanne bei der Induktionsspule 1 liegt, das heisst je kürzer der Abstand zwischen Pfannenboden und Induktionsspule 1 ist, umso stärker ist die Heizleistung, die induziert wird. Wird die Pfanne auf der Induktionsherdplatte 2 in Richtung nach rechts verschoben, so wird der Abstand zur Induktionsspule 1 aus geometrischen Gründen grösser und die Heizleistung nimmt stetig ab. Dieser Sachverhalt ist anhand von Figur 2 gut einsehbar. Die Induktionsherdplatte 2, zum Beispiel aus Ceranglas gefertigt, ist durchgehend von gleichmässiger Stärke. Die Figur 2 zeigt unter dieser Induktionsherdplatte 2 die schiefwinklig zu ihr angeordnete Induktionsspule 1 in einer schematischen Ansicht von der Seite her gesehen gezeigt.

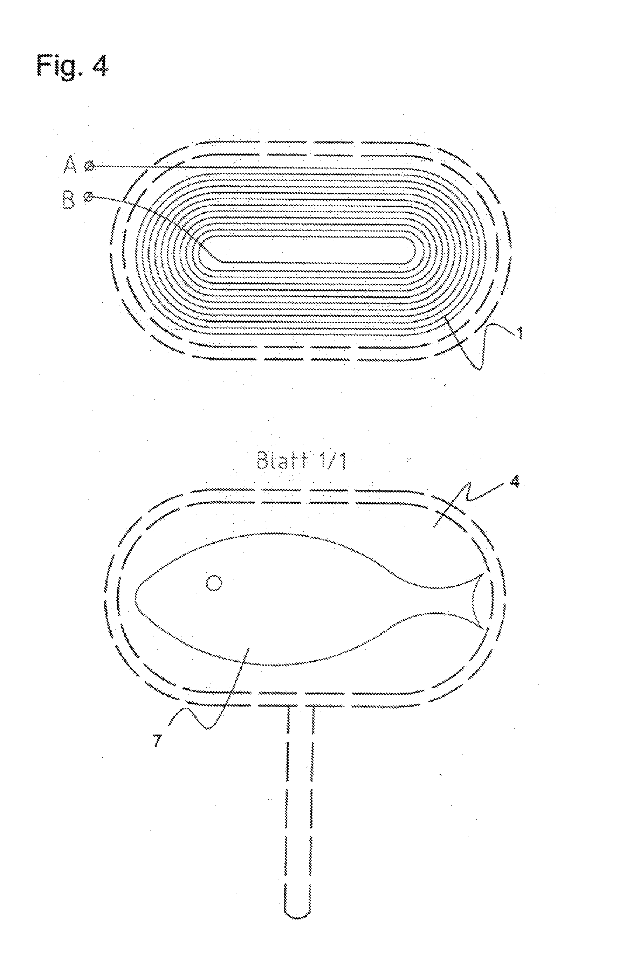

In Figur 4 ist die Spule 1 von oben gesehen dargestellt. Sie weist eine Wicklung auf, die Nullen-förmig in einer Ebene liegt. Zur Verstärkung der Induktion sind Ferrite 3 unter den Spulenwindungen eingelegt. Die Figur 4 zeigt diese Induktionsspule in einer Ansicht von oben gesehen, und daneben angeordnet bzw. im Bild unterhalb der Spule 1 eine darauf passende Fischpfanne 4. Eine Fischpfanne 4 hat gemäss der Form eines Fisches 7 eine längliche Form mit abgerundeten Enden. Wird eine Fischpfanne 4 auf einem Induktionsherd mit kreisrunden Induktionsspulen eingesetzt, so ist die Erhitzung des Pfannenbodens stets sehr unregelmässig, denn die Induktionsspule 1 liegt dann regelmässig nur unterhalb eines Teils der Fischpfanne 4, während diese die Induktionsspule 1 mit ihren beiden Enden der länglichen Form überragt, oder mindestens auf einer Seite die Induktionsspule 1 überragt. Dort wird der Pfannenboden überhaupt nicht durch Induktion erhitzt, sondern nur durch die Wärmeausdehnung innerhalb des Pfannenbodens, was mit einer gewissen Verzögerung einsetzt. Der Pfannenboden, welcher direkt über der Induktionsspule 1 liegt, wird regelmässig stärker erhitzt. Wenn nun aber die Induktionsspule 1 die hier gezeigte Form aufweist, so eignet sie sich hervorragend zum Aufsetzen einer Fischpfanne 4. Diese liegt sodann überall über dem Spulenmaterial und ihr Pfannenboden wird somit auch überall durch Induktion erhitzt. Eine gleichmässigere Erhitzung ist dadurch sichergestellt. Wenn die Wicklungsebene dieser Induktionsspule 1 wie in Figur 1 oder 2 gezeigt schiefwinklig zur Oberfläche der Induktionsherdplatte eingebaut ist, und die Länge der Induktionsspule die Länge der Fischpfanne übertrifft, so gestattet das, die wirksame Heizleistung über einen bestimmten Heizbereich mittels Verschieben der Pfanne längs der länglichen Induktionsspule 1 zu variieren.

Die Figur 4 zeigt diese Nullen-förmige Induktionsspule 1 unter einer Induktionskochherdplatte 2 wie in Figur 1 und 2 gezeigt eingebaut, hier nun mit einer runden Pfanne 5, die ganz links auf den Induktionsherd 2 aufgesetzt ist. Entsprechend ist an diesem Platz der Pfanne 5 der Abstand zwischen dem Pfannenboden und der darunter angeordneten Induktionsspule minimal und die induzierte Heizleistung ist maximal.

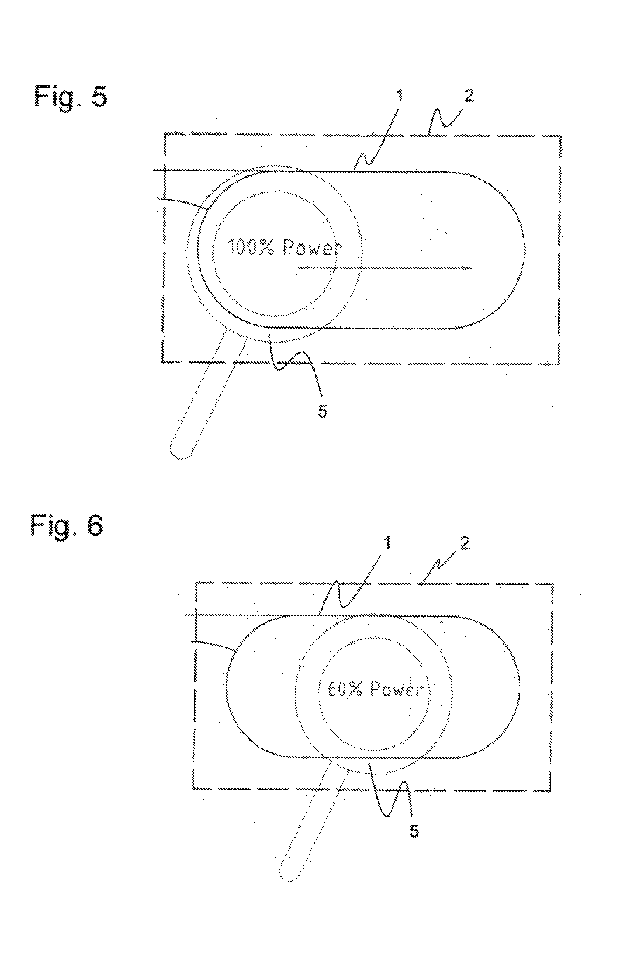

Die Figur 6 zeigt denselben Induktionskochherd, jetzt aber mit der runden Pfanne 5 etwas nach rechts verschoben, bis diese wie gezeigt in der Mitte der Induktionsspule 1 liegt. In dieser Lage ist der Abstand zwischen Pfannenboden und Induktionsspule 1 mittelgross, und entsprechend ist die induzierte Heizleistung eine mittlere Heizleistung.

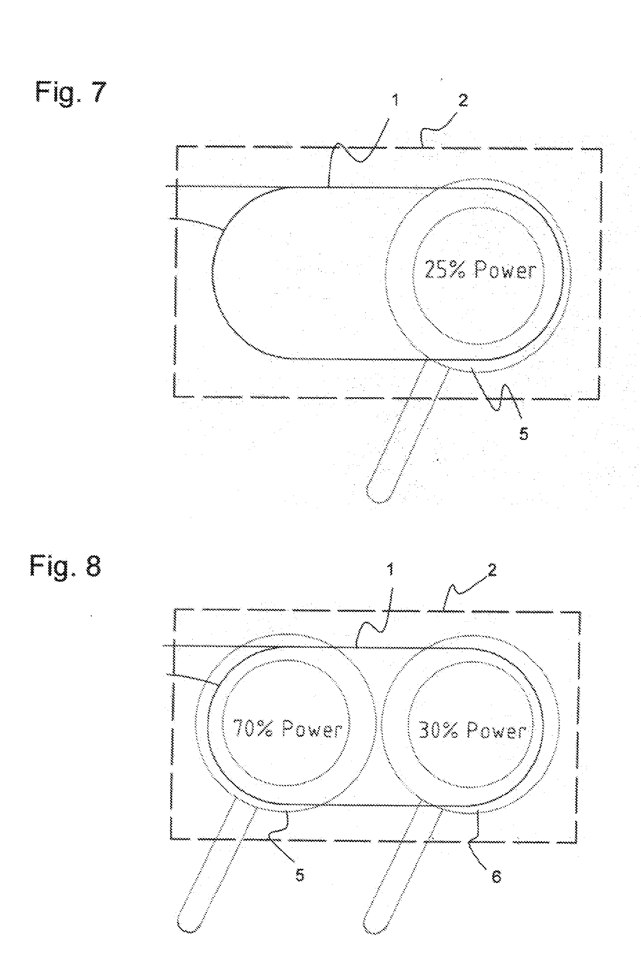

In Figur 7 schliesslich ist die runde Pfanne 5 ganz rechts über der Induktionsspule 1 abgestellt. Dort ist der Abstand zum Pfannenboden maximal und entsprechend ist die induzierte Heizleistung am stärksten reduziert. Typischerweise wird man die Anordnung bzw. den Abstand so wählen, dass bei voller Induktions-Wechselspannung die Heizleistung bei dieser Position der Pfanne zum Beispiel ca. 25% der Heizleistung beträgt, im Vergleich zu jener bei ganz links über der Induktionsspule 1 aufgesetzter Pfanne 5.

Die Figur 8 zeigt diese Induktionsspule 1 unter einer Induktionskochherdplatte 2 mit gleichzeitig zwei Pfannen 5,6 darauf angeordnet. Die 100%ige Heizleistung wird hier von zwei Pfannen 5,6 absorbiert. Daher kann mit der Pfanne 5 links keine 100%ige Heizleistung bezogen werden, sondern nur noch ca. 70%, während die ganz rechts aufgesetzte Pfanne 6 eine Heizleistung von ca. 30% bezieht.

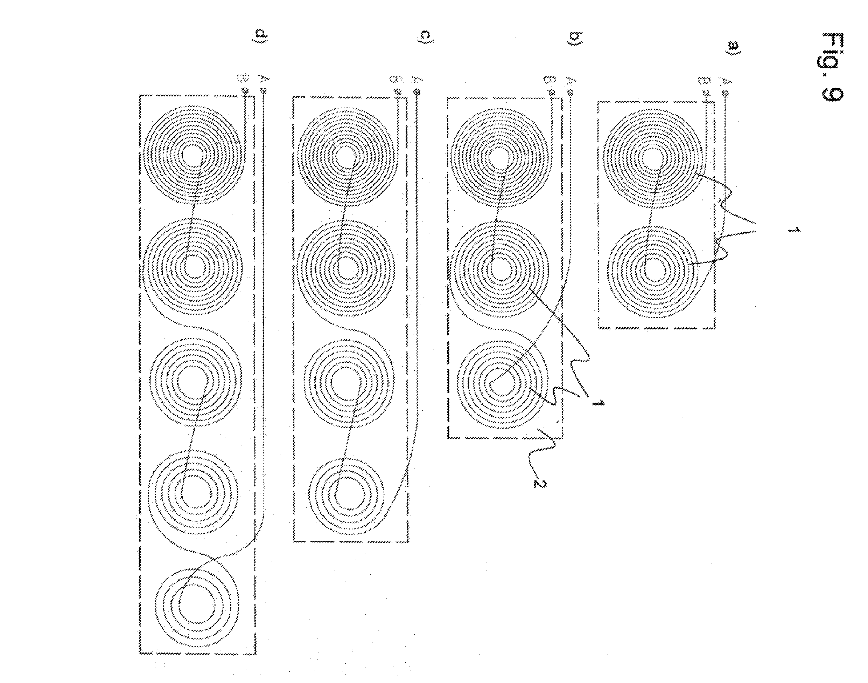

Die Vorteile dieser schiefwinkligen Anordnung der Induktionsspule 1, und insbesondere einer länglichen Induktionsspule wie in den Figuren 1 bis 7 gezeigt sind ganz offensichtlich. Die Heizleistung lässt sich mit einer Pfanne durch simples Verschieben der Pfanne auf dem Induktionsherd verändern, wobei jedoch die Pfanne stets komplett oberhalb der Induktionsspule verbleiben kann und somit in jeder Einstell-Lage der Pfannenboden an allen Orten durch die Induktionswirkung erhitzt wird, wodurch also eine annähernd gleichmässige Erhitzung erzielt wird. Das Mass der Erhitzung insgesamt ist jedoch abhängig von der jeweiligen Position der Pfanne auf dem Induktionsfeld. Diese Art der Leistungsregulierung, das heisst durch simples Verschieben der Pfanne, ist für den Koch sehr angenehm. Der Koch hat damit stets eine Hand frei für den Pfannenstiel. Ausserdem lässt sich so die Heizleistung blitzschnell und ausserdem stetig regeln. Einen Blick in die Pfanne werfen, und sie dann je nachdem ein paar Zentimeter in die eine oder andere Richtung schieben - das Ergebnis beobachten - und wenn nötig korrigieren, das ist für die Köche sehr einfach und praktisch zu handhaben. Ein weiterer Vorteil ist dadurch geboten, dass es möglich wird, mehrere Pfannen bei Einstellung einer einzigen Induktionsleistung des Herdes gleichzeitig an verschiedenen Orten auf dem Herd abzustellen, die dann mit unterschiedlicher Heizleistung beheizt werden. Bei einer länglichen Induktionsschlaufe, die geneigt angeordnet ist, können längs dieser Schlaufe zwei oder gar drei Pfannen abgestellt werden, die dann bei einer bestimmten Induktionsleistung verschieden stark beheizt werden. Diese Situation ist in Figur 8 dargestellt. Gleichermassen kann man bei der Anordnung gemäss Figur 9d zum Beispiel fünf Pfannen bei einer einzigen eingestellten Induktionsleistung mit verschiedenen Heizleistungen erhitzen. Sehr praktisch erweist sich dieser Vorteil beim Zubereiten einer Kartoffel-Rösti. Eine solche Rösti ist ein flacher, in heisser Butter oder Fett in der Pfanne ausgebackener Fladen aus geriebenen gekochten oder rohen Kartoffeln. Ein ähnliches Gericht sind die "Hash Browns" in den U.S.A., oder die Kartoffelpuffer in Deutschland. Wenn ein solches Kartoffelgericht auf höchster Heizstufe fertig angebraten ist, muss die Pfanne bloss ein wenig verschoben werden, sodass die Heizleistung reduziert wird und die Speise dann bloss noch warmgehalten wird.

Der annähernd gleiche Effekt lässt sich aber auch dadurch erzielen, dass mehrere Induktionsspulen so angeordnet werden wie in Figur 9a-d gezeigt. Die Anordnung schliesst je eine Reihe von Induktionsspulen 1 mit von Spule zu Spule degressiver Heizleistung bei gleicher Spannung ein. In Figur 9a handelt es sich um zwei in Serie geschaltete Spulen auf gleicher Ebene und horizontal angeordnet, wobei jedoch die hier im Bild rechts angeordnete Spule weniger Windungen aufweist und demzufolge eine geringere Induktionsleistung bietet. Eine Pfanne wird also auf der Spule links die höchste Heizleistung beziehen, über der Spule rechts die niedrigste und dazwischen Leistungen zwischen diesen beiden Maxima.

In Figur 9b ist noch ein weitere Induktionsspule 1 angeschlossen, mit noch weniger Windungen. Es gilt das gleiche Prinzip. Die Induktionsleistung nimmt von links nach rechts ab, das heisst die Pfanne kann von rechts nach links und umgekehrt geschoben werden.

In Figur 9c zeigt ein Kochfeld 2 mit vier in Serie geschalteten und in einer Reihe angeordneten Induktionsspulen mit von links nach rechts jeweils abnehmender Anzahl Windungen. Auch hier gilt das gleiche Prinzip. Die Induktionsleistung nimmt von links nach rechts ab, das heisst es kann mit der Pfanne von rechts nach links und umgekehrt gefahren werden, durch einfaches Verschieben.

In Figur 9d zeigt ein Kochfeld mit fünf in Serie geschalteten und in einer Reihe angeordneten Induktionsspule mit von links nach rechts jeweils abnehmender Anzahl Windungen. Mehrere Kochfelder nach dieser Art können in einem Induktionsherd miteinander kombiniert werden, je nach Bedarf. Die variierbare Heiz- bzw. Induktionsleistung wird also hier durchwegs mittels Induktionsspulen unterschiedlicher Windungsanzahl realisiert, welche dann in Serie geschaltet sind, also mit der gleichen Hochfrequenz-Spannung versorgt werden.

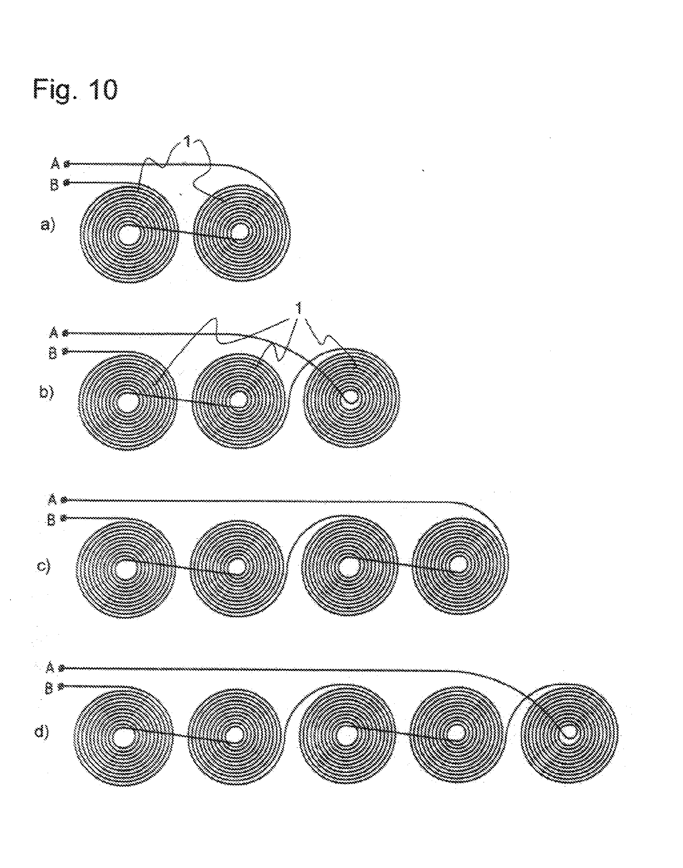

Die Figuren 10a-d zeigen eine weitere Alternative zum Realisieren eines Induktionskochherdes, welcher das Regulieren der Heizleistung erlaubt, ohne dass spezifische Bedienelemente ergriffen werden müssen, und trotzdem der Boden der Kochgeräte annähernd homogen erhitzt wird. Hier sind mehrere Anordnungen von Induktionsspulen gezeigt, die jeweils in Serie geschaltet sind, jedoch alle gleich viele Windungen aufweisen. Eine solche Reihe von Induktionsspulen wird - egal ob es bloss zwei oder wie in Figur 9d gezeigt zum Beispiel fünf Induktionsspulen sind, die in einer Reihe angeordnet sind und in Serie geschaltet sind, in einer einzigen Wicklungsebene angeordnet. Die Wicklungsebene wird nun erfindungsgemäss jedoch schiefwinklig zur Oberfläche des Induktionsherdes bzw. der Herdplatte eingebaut. Die Wicklungsebene schliesst dann mit der Oberfläche der Induktionsherdplatte einen spitzen Winkel ein, wie etwa in den Figuren 1 und 2 dargestellt.

Diese Reihen von Induktionsspulen unterschiedlicher Länge können sodann je nach Bedarf in einem Induktionskochherd zusammenkombiniert werden. Es kann zum Beispiel ein spezielles Kochfeld für Fischpfannen realisiert werden, und daneben eines für runde Pfannen, mit je nachdem grössere Bandbreite für die Regulierung der Induktionsleistung.

Auf jeden Fall wird das Kochen mit einem derartigen Induktionsherd für den Koch sehr viel bequemer und praktischer. Er kocht einzig noch mit der Pfanne und braucht den Herd im Prinzip beim Kochen gar nicht mehr zu bedienen oder zu berühren. Ausserdem ist die Hitzeverteilung homogener als wenn die Pfanne wie herkömmlich einfach teilweise vom Bereich einer Induktionsspule weggezogen wird und dann ein Teil des Pfannenbodens überhaupt nicht mehr durch Induktion erhitzt wird. Ausserdem kann bei einem solchen Induktionsherd blitzschnell reagiert werden, durch simples Verschieben der Pfanne. Das Ergebnis wird unmittelbar sichtbar und es kann bedarfsweise schnell nachkorrigiert werden, worin ein geübter Koch rasch eine grosse Routine entwickelt.

Die Heizleistung eines derartig konstruierten Induktionskochherdes ist also interaktiv einstellbarer, das heisst die Pfanne geht eine Wechselwirkung mit dem Induktionsherd ein und dient selbst als Mittel zum sauberen Regulieren der Heizleistung.

## Patentansprüche

1. Induktionskochherd mit interaktiv einstellbarer Heizleistung, ***dadurch gekennzeichnet,* dass** er mindestens eine Induktionsspule (1) aufweist, deren Spulenebene mit der Oberfläche der Induktionsherdplatte (2) einen spitzen Winkel einschliesst, oder der mindestens zwei in Serie geschaltete Induktionsspulen (1) mit unterschiedlicher Windungszahl aufweist, sodass durch horizontales Verschieben des Kochgerätes (4,5,6) auf der Induktionsherdplatte die wirksame Heizleistung im Boden des Kochgerätes (4,5,6) variierbar ist.

2. Induktionskochherd mit interaktiv einstellbarer Heizleistung nach Anspruch *1,* ***dadurch gekennzeichnet,* dass** die Induktionsspule (1) eine längliche Wicklung aufweist, mit geraden Leiterabschnitten und gekrümmten beidseitigen Enden, und dass die Ebene der Wicklung unterhalb der Induktionsherdplatte (2) schiefwinklig zur Oberfläche derselben angeordnet ist.

3. Induktionskochherd mit interaktiv einstellbarer Heizleistung nach Anspruch *1,* ***dadurch gekennzeichnet,* dass** die Induktionsspule (1) eine rechteckige Wicklung aufweist, mit geraden Leiterabschnitten und nur an den Ecken des Rechteckes gekrümmte Leiterabschnitte abweist, und dass die Ebene der Wicklung unterhalb der Induktionsherdplatte (2) schiefwinklig zur Oberfläche derselben angeordnet ist.

4. Induktionskochherd mit interaktiv einstellbarer Heizleistung nach einem der vorangehenden Ansprüche, ***dadurch gekennzeichnet,* dass** die mehreren Induktionsspulen (1) in Serie geschaltet in einer Reihe angeordnet sind, und dass die Ebenen ihrer Winklungen identisch sind und unterhalb der Induktionsherdplatte (2) schiefwinklig zur Oberfläche derselben angeordnet sind.

5. Induktionskochherd mit interaktiv einstellbarer Heizleistung nach Anspruch *1,* ***dadurch gekennzeichnet,* dass** er mindestens mehrere in Serie geschaltete Induktionsspulen (1) mit unterschiedlicher Windungszahl aufweist, die in einer Reihe angeordnet sind, und deren Wicklungsebenen alle in derselben Ebene liegen, und dass diese Ebene parallel zur Oberfläche der Induktionsherdplatte verläuft, sodass durch horizontales Verschieben des Kochgerätes (4,5,6) auf der Induktionsherdplatte (2) die wirksame Heizleistung im Boden des Kochgerätes (4,5,6) variierbar ist.

6. Induktionskochherd mit interaktiv einstellbarer Heizleistung nach Anspruch *5,* ***dadurch gekennzeichnet,* dass** er mehrere in Serie geschaltete Induktionsspulen (1) mit unterschiedlicher Windungszahl aufweist, die in einer Reihe angeordnet sind, und deren Wicklungsebenen alle in derselben Ebene liegen, und diese Ebene schiefwinklig zur Oberfläche der Induktionsherdplatte (2) verläuft, sodass durch horizontales Verschieben des Kochgerätes (4,5,6) auf der Induktionsherdplatte die wirksame Heizleistung im Boden des Kochgerätes (4,5,6) variierbar ist.

7. Induktionskochherd mit interaktiv einstellbarer Heizleistung nach einem der vorangehenden Ansprüche, ***dadurch gekennzeichnet,* dass** er längliche Induktionsspulen (1) wie auch kreisrunde aufweist, und dass mindestens eine längliche oder mindestens eine Reihe von kreisrunden Induktionsspulen (1) mit ihren gemeinsamen Winklungsebenen unterhalb der Induktionsherdplatte (2) schiefwinklig zur Oberfläche derselben angeordnet sind.

8. Induktionskochherd mit interaktiv einstellbarer Heizleistung nach einem der vorangehenden Ansprüche, ***dadurch gekennzeichnet,* dass** er eine Kombination von Ausführungen gemäss diesen Ansprüchen aufweist.
